# EUROPEAN PATENT SPECIFICATION

(11) **EP 0 491 402 B1**
(45) Date of publication and mention of the grant of the patent: **19.03.1997**
(21) Application number: 91121861.8
(22) Date of filing: 19.12.1991
(51) Int. Cl.: F25D 5/00, C09K 5/06

(54) **Latent heat storage solution**
Latentwärmespeicherlösung
Solution de stockage de chaleur latente

(30) Priority: 19.12.1990 JP 403766/90; 25.04.1991 JP 95645/91
(43) Date of publication of application: 24.06.1992
(73) Proprietor: TOKYO ELECTRIC POWER COMPANY, Chiyoda-ku, Tokyo (JP); MAEKAWA MFG. CO. LTD., Tokyo (JP); ASAHI DENKA KOGYO KABUSHIKI KAISHA, Arakawa-ku Tokyo (JP)
(72) Inventor: Kuroda, Syoichi, c/o Tokyo Electric Power Co., Chiyoda-ku, Tokyo (JP); Shibata, Soichiro, c/o Tokyo Electric Power Co., Chiyoda-ku, Tokyo (JP); Shimamura, Noriyuki, c/o Tokyo Electric Power Co., Chiyoda-ku, Tokyo (JP); Kawasaki, Shigetake, Isehara-shi, Kanagawa-ken (JP); Kasahara, Keisuke, Maekawa MFG. Co., Ltd., Koto-ku, Tokyo (JP); Sakuma, Seiich, Maekawa MFG. Co., Ltd., Koto-ku, Tokyo (JP); Komatsu, Fujio, Maekawa MFG. Co., Ltd., Koto-ku, Tokyo (JP); Ishikawa, Masaya, Maekawa MFG. Co., Ltd., Koto-ku, Tokyo (JP); Sugiyama, Kunio, c/o Asahi Denka Kogyo K.K., Arakawa-ku, Tokyo (JP); Mashimo, Mitsuo, c/o Asahi Denka Kogyo K.K., Arakawa-ku, Tokyo (JP); Shindo, Yuzuru, c/o Asahi Denka Kogyo K.K., Arakawa-ku, Tokyo (JP); Kawamura, Kuniaki, Kita-soma-gun, Ibaragi-ken (JP)
(74) Representative: Strehl Schübel-Hopf Groening & Partner

(56) References cited:
- EP-A- 0 260 759
- US-A- 4 324 287
- PATENT ABSTRACTS OF JAPAN, unexamined applications, M field, vol. 11, no. 255, August 19, 1987 THE PATENT OFFICE JAPANESE GOVERNMENT page 157 M 617 & JP-A-62 62 192 (SUMITOMO)
- WORLD PATENTS INDEX (Online), ACCESSION NO. 90-302 412, DERWENT PUBLICATIONS LTD., London & JP-A-2 214 793 (ASAHI DENKA)

## Description

### BACKGROUND OF THE INVENTION

### [Field of the Invention]

This invention relates to a latent heat storage solution and its use in a latent heat storage apparatus, for storing and retrieving a cool heat substantially in or from a latent heat thereof. Such a solution is necessary for air conditioning, cooling, refrigerating, and so forth.

### [Description of the Prior Art]

Aqueous solution of ethylene glycol, propylene glycol, calcium chloride, sodium chloride, or the like has been used as cool heat transfer solution, or so called as brine in an evaporation tank of refrigeration cycle to absorb or evolve the cool heat below 0 °C.

If the load which receives the cool heat with the brines of this kind requires a temperature range with strict fluctuation, an ample volume of brines enough to moderate the unavoidable temperature fluctuation has to be prepared to keep the temperature constant in the evaporation tank and the load site as well, because the brines store or transfer the cool heat by means of heat capacity of the solution, which heat is referred as kinetic heat as an antonym of latent heat hereinafter.

Therefore, a brine tank or the evaporation tank for the system relied on the kinetic heat becomes large in scale to contain the ample volume, which results in lacking preferable economic performance due to increase of the initial, installation and running costs.

A technique for latent heat storage apparatus, therefore, has been proposed nowadays to resolve the issue above, wherein a part of brines is frozen/thawed and its latent heat is used to absorb/evolve cold heat. The means for storage of cold heat provides a high density of cold heat comparing to the means relied on the kinetic heat, and an easy evolution of cold heat within a stable range of temperature. The means for cold heat is assembled in a simple and compact system which is widely applied in a field of civil engineering including food industry.

The latent heat storage apparatus includes mainly two systems, one of which is called a capsule system, and the other is called an ice bank system. The former is furnished with a number of capsules piled in a cold heat storage tank, which capsules enclose an inorganic salt solution which coincides with the eutectic composition, wherein the capsules contacting with the brine absorb/evolve the cold heat as the latent heat. The latter comprises a cold heat storage tank which contains a brine of an inorganic salt or ethylene glycol water solution which is frozen to store cold heat as the latent heat with a cooling tube, wherein the cold heat is retrieved from the frozen solid which evolves the latent heat of fusion.

In the former system, however, having interposed the capsules, the cold heat is transferred in multistage manner through the cooling tube of the refrigerator, as brine and capsule, resulting in that the evaporation temperature of the coolant in the refrigerator cooling tube has to be set as low as to reduce the thermal efficiency of the system.

As the capsule is generally formed in ball or cylindrical shape, the capsules piled in the storage tank provide a number of spaces between one another, which, together with some thickness of the wall, reduce inevitably the volumetric density of the latent heat storage solution per unit volume of the storage tank.

Further, the capsule is formed of plastic resin to obtain readiness for enclosure of the latent heat storage solution, and to save production cost. The resin wall is thermally less conductive than that of metals. The poor conductivity of the wall in addition to the wall thickness results in a rise of power for the refrigerator and in a prolonged processing time and in consequence in a low operational temperature of refrigerator coolant contacting with the capsule.

In the reverse process for retrieving cold heat, the system having disposed the capsule in the thermal passage has to set the storage temperature much lower than the desired retrieving temperature because of the same reason above, resulting in the system being less efficient.

As for the latter ice bank system, on the other hand, a technique is disclosed in Japanese Laid Open Application No. 62-62192 which is called the first prior art hereinafter. The first prior art proposes a system furnished with an evaporator comprising cooling cycle as a heat exchanger in a heat storage tank in which coolant is filled up. The coolant circulates to and from a load. The coolant as a latent heat storage solution is made of two-component inorganic salts solution each of which has a eutectic point below 0 °C respectively, more practically, an aqueous solution of potassium chloride and sodium chloride each of which forms a eutectic with ice and respective salt.

Further, a technique is disclosed in Japanese Laid Open Application No. 2-214793 which is called the second prior art hereinafter. The second prior art proposes to improve further the latent heat storage solution which revolves cold heat at -5°C during the retrieving process from the latent heat of fusion thereof, which is made of an aqueous solution of potassium nitrate and sodium nitrate.

The first prior art, however, simply refers to each of eutectic points for the water-potassium chloride, and the water-sodium chloride, in other words, the binary eutectic points. Because no further technique has been disclosed for the three-component system nor a ternary eutectic point, the first prior art teaches how to retrieve the desired cold heat at what concentration of the solution, wherein no one can control accurately the temperature in advance.

In the event when the initial concentration of salts in the latent heat storage solution exceeds beyond that of the ternary eutectic, inorganic salt crystal or salt hydrate separates to deposit in the liquid mixture upon cooling. The salt deposited at the bottom of the heat storage tank is hard to dissolve again in the solution upon heating to evolve the cold heat, wherein the low temperature of the solution is one of the reasons.

In the second prior art, the latent heat storage solution consists of potassium nitrate and sodium nitrate at the specific concentration, wherein the retrievable cold heat is limited at about -5 degrees. The technique further involves an issue as described in the first prior art above to separate the nitrate salt upon cooling of the solution, because the concentration range of potassium nitrate includes a range beyond that of the ternary eutectic.

### SUMMARY OF THE INVENTION

### [Object of the Invention]

It is an object of this invention to provide a latent heat storage solution which allows to retrieve invariably a cold heat at a temperature which can be arbitrarily specified easily within a certain range. This object is solved by the solution set forth in claim 1.

### [Constitution]

The present invention is applicable to a latent heat storage apparatus the heat storage tank of which contains a latent heat storage solution consisting of a plurality of inorganic salts which are dissolved in an aqueous solution, wherein-cold heat is retrievable from the latent heat storage solution using the latent heat thereof.

The latent heat storage solution is formed as an aqueous solution of N-component mixture of (N-1) kinds of inorganic salts, in which N is at least 3, wherein the concentration of the salts is set in an eutectic tortuous plane including the ice point of the liquid-solid equilibrium diagram, wherein the cold heat is stored invariably at an arbitrary temperature in the latent heat storage solution as the latent heat thereof to form ice, binary eutectics with ice, or separated substances in advance, whereby the cold heat is retrievable invariably at the arbitrary temperature in a range above the N-component eutectic point and below any one of binary eutectic points of ice and salts.

It is more preferable to set the concentration of inorganic salts in the solution within a concentration range of 50 to 98 wt. % of that along any one of eutectic lines connecting the ice point and the binary eutectic points with ice and thereof.

The apparatus, therefore, is able to achieve the object of the invention, if the apparatus is included in a system described later, to store or retrieve the cold heat in or out of the latent heat storage solution applying the binary eutectics and N-component eutectic included in the N-component tortuous manifold or plane.

It is practical to form the system so that the apparatus is connected with the load through circulate tubes to retrieve the cold heat directly from the separated substances which have stored the cold heat as latent heats thereof, which achieves a preferable thermal efficiency.

The apparatus may be generally formed to have a heat exchanger disposed in the latent heat storage tank, wherein coolant circulates in the heat exchanger to work for an evaporator, but is not limited thereto.

### [Function and Effects of the Invention]

The function and effects of the present invention will be described as follows.

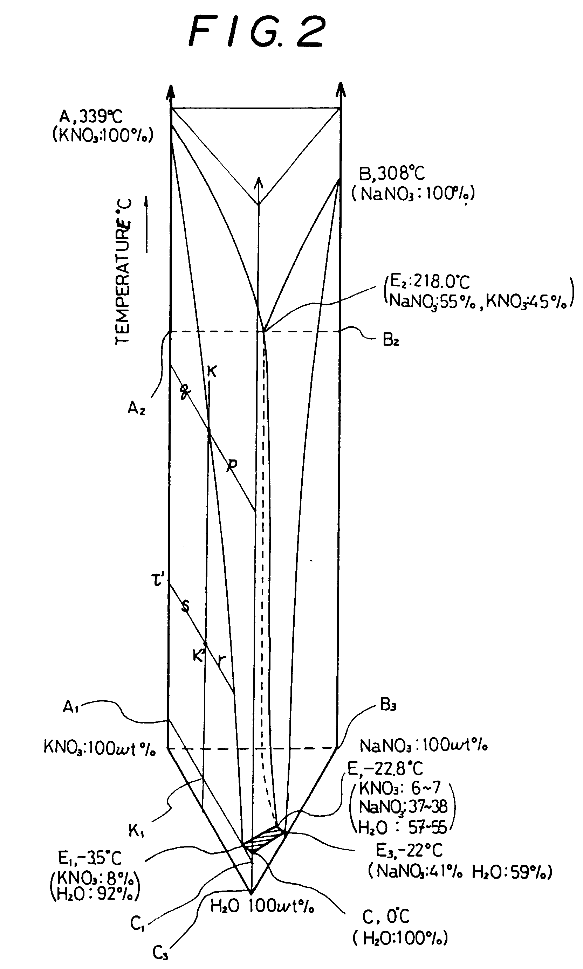

As described earlier, the latent heat storage solution of this invention consists of an aqueous solution dissolving at least two inorganic salts which forms an N-component solution wherein N is greater than or equal to 3 (N ≥ 3). The concentration of inorganic salts in the latent heat storage solution is set in a range corresponding to that of the ice point, binary eutectic points of the salts with ice, and the N-component eutectic point. If the latent heat storage solution is cooled below the ice point as illustrated in FIG. 2, the solution, which keeps the liquid phase for a while showing a depression of the freezing point of the aqueous solution, commences to separate ice and (N - 1) kinds of binary eutectics in the order of their freezing temperatures, depending on the composition of the mixture. The solution becomes a two-phase solution consisting of solid, ice and binary eutectics, and liquid, a condensed aqueous solution. As further cooling of the mixture proceeds, the storage solution commences to separate the N-component eutectic until finally forming a single phase of solid mixture of ice, binary eutectics and N-component eutectic.

Every separation process requires a latent heat. The latent heat storage solution absorbs cold heat equivalent to a solidify latent heat of water to form ice, and each one of solidifying latent heats of eutectics to form the corresponding binary eutectics and N-component eutectics.

In the process, therefore, the temperature changes slower comparing to that of the single component of water, or even remains unchanged especially during the separation of N-component eutectic at the definite N-component eutectic point.

If the solid mixture of ice and eutectics is reversely heated until it liquefies completely to reach the depressed freezing point, the latent heat storage solution retrieves the cold heat equivalent to the heat of fusion, the reverse of the solidify latent heat. On heating further, the liquid solution elevates its temperature retrieving the cold heat equivalent to the kinetic heat at the rate of the specific heat of the solution.

Therefore, on comparing the kinetic heat and the latent heat with respect to a unit weight, the latter is generally much greater than the former. In the state in which both solid and liquid exist, that is the state of ice + eutectics + liquid solution, the cold heat is retrievable from the latent heat of fusion which ice and eutectics release.

Further, because the N-component eutectic point is lower than every binary eutectic point, it is possible to set arbitrarily the temperature to retrieve the cold heat within a range between any one of the freezing points and the N-component eutectic point preparing suitably the composition and the initial concentration of the solution of inorganic salts.

And further, it is possible to maintain a ratio of ice and eutectics to the aqueous solution, or an ice packing factor (IPF in short, hereinafter) at more than 30 % and still to achieve a high dissolving speed, because the concentration of the inorganic salts in the latent heat storage solution is set in the range of 50 to 98 wt. % of that along the eutectic line connecting any one of the binary eutectic points with water and the N-component eutectic point.

It is possible as well to avoid to separate the crystal salts or hydrates thereof during the cold heat storage process, because the concentration of any one of inorganic salts is set in a range of 60 to 98 wt. % of that at the binary eutectic point with ice and thereof, and the total concentration of the solution is less than that at the N-component eutectic point, whereby one can be free from bothering with the dissolving speed of the crystal salts and hydrates in the cold heat retrieve process, because there is no such solid which may pile at the bottom of the heat storage tank.

The concentration of the salts in the latent heat storage solution is set in a range, where the solid-liquid phase tortuous plane including the ice point and the N-component eutectic point shows a flat slope compared to a steep slope of the rest solid-liquid tortuous planes which include the melting points of any couple of inorganic salts and the N-component eutectic point. Thus, the cold heat can be efficiently stored or evolved invariably at any temperature within the range between the depressed freezing point and the N-component eutectic point depending on the composition and initial concentration, maintaining the maximum IPF at the desired ratio.

Comparing the slope of the solid-liquid line connecting the ice point and each of the binary eutectic points with that of lines connecting the binary eutectic point next to the ice point and the N-component eutectic point at the rather higher part below the ice point, the latter are flatter than the former in most occasions. Compared with the use of the latent heat of water alone in the two-component system, it is advantageous to retrieve the cold heat from the ice + binary eutectics with ice within the appropriate IPF.

Therefore, it is possible to supply the cold heat to the load at the freezing point as desired within the temperature range below the binary eutectic point with ice and above the N-component eutectic point, which freezing point is arbitrarily set with the composition and concentration of the (N - 1) kinds of inorganic salts of the latent heat storage solution as to the N-component aqueous solution filled in the heat storage tank, wherein N is greater than or equal to three (N ≥ 3).

Because the cold heat is stored in or retrieved from the latent heat storage solution utilizing the binary and N-component eutectics in the N-component tortuous plane which enables to choose arbitrarily the freezing or fusion points, the cold heat is stably retrievable keeping the almost invariable temperature.

It is further possible to save a loss of thermal energy, and to raise the thermal efficiency of the latent heat storage apparatus, because the latent heat of separated substances, the binary or N-component eutectics, is directly exchangeable with the cold heat at the load site.

It is also understandable in another point of view that a solid-liquid line represents a solubility curve corresponding to respective temperatures. Therefore, the salt concentration at the binary eutectics in the N-component tortuous plane, the temperature being above the N-component eutectic point, is smaller than the saturated concentration, that is, that at the N-component eutectic. During the retrieve process of cold heat from the latent heat, the binary eutectics can be dissolved in the liquid at a faster rate without depressing the rate of the process. The faster dissolving rate, therefore, enables a duration for fusion at the invariable fusion point to be much longer, because the eutectics dissolve without time lag corresponding to the rate of process without raising the fusion point.

### BRIEF DESCRIPTION OF THE DRAWINGS

FIG. 1 is a schematic diagram illustrating a latent heat storage apparatus as an evaporator of a refrigeration cycle embodying the invention.

FIG. 2 is a triangular prism diagram illustrating solid-liquid phase equilibria of three-component aqueous solution embodying the invention.

FIG. 3 is a temperature-time diagram illustrating the freezing and fusion curve of the latent heat storage solution described later in TABLE 2.

### DETAILED DESCRIPTION OF THE PREFERRED EMBODIMENT

Preferred embodiments of this invention will be described illustratively in detail with reference to the drawings. Unless otherwise specified, sizes, materials, shapes, relative arrangements, etc. of the constitutional parts described for the embodiments, are not intended to limit the scope of the invention thereto, but are just for illustrative purpose.

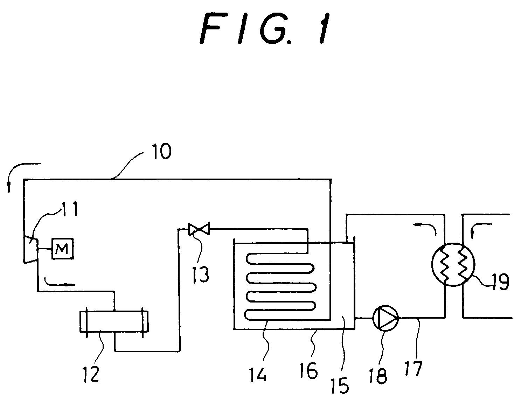

FIG. 1 is a schematic diagram illustrating a latent heat storage apparatus as an evaporator of a refrigeration cycle embodying the invention. The constitution of the refrigeration cycle is as follows.

The numeral 11 is a compressor driven by power engine. The outlet of the compressor 11 is connected with a condenser 12. The condenser is led to a heat storage tank 16 through an expansion valve 13 connected with a heat exchanger 14 wound in a coil acting as an evaporator disposed in the heat storage tank 16. The outlet of the heat exchanger 14 is connected with the inlet of compressor 11, which forms a refrigeration cycle 10 known in the traditional technique.

The heat storage tank 16, which contains the heat exchanger 14, is filled with a latent heat storage solution 15, an aqueous solution of inorganic salts. The latent heat storage solution 15 can circulate to a load through a circulation passage 17 which connects in sequential order the heat storage tank 16, a pump 18, heat exchanger 19, and returns to the heat storage tank 16.

TABLE 1 shows general information relating to a three-component aqueous solution of potassium nitrate (KNO₃)- sodium nitrate (NaNO₃)- water (H₂O) on concentration of eutectics, eutectic points, and melting points of component inorganic salts. FIG. 2 is a triangular prism diagram illustrating solid-liquid phase equilibria of the three-component aqueous solution embodying the invention. Before describing examples of the latent heat storage solution 15 which are aqueous solutions of potassium nitrate and sodium nitrate, the three-component system in different concentrations, general information on the three-component system will be described as follows.

In the prism illustrating the solid-liquid phase equilibria as shown in FIG. 2, the prism has an equilateral triangle base with vertical edge lines in which the concentration of each component is 100 wt. % at the respective corner edges of the triangle, and the temperature of the system is graduated along the vertical edge lines. Points A, B and C represent melting points of the respective elements, potassium nitrate, sodium nitrates and water. Points E₁, E₂ and E₃ are the respective binary eutectic points, KNO₃ - H₂O, KNO₃ - NaNO₃, and NaNO₃ - H₂O. Those temperatures and concentrations are shown in the TABLE 1.

**TABLE 1.**

| EUTECTICS RELATING TO THREE-COMPONENT | | | | |
|---|---|---|---|---|
| LETTERS FOR EUTECTICS | CONCENTRATION OF EUTECTICS ( wt. % ) | | | EUTECTIC POINTS ( °C ) |
| | KNO₃ | NaNO₃ | H₂O | |
| E₁ | 8 | -- | 92 | -3.5 |
| E₂ | 45 | 55 | -- | 218.0 |
| E₃ | -- | 41 | 59 | -22.0 |
| E | 6- 7 | 37-38 | 57-55 | -22.8 |

- Ta:: Melting Point of KNO₃ is 339°C,
- Tb:: Melting Point of NaNO₃ is 308°C, and
- Tc:: Melting Point of H₂O is 0°C.

Each vertical face of prism illustrates a two-component system, as shown in FIG. 2, thus for potassium-water system, the curve AE₁ represents the conditions of temperature under which the liquid phase is in equilibrium with the solid phase of potassium nitrate and the initial concentration of the nitrate is 8 to 100 wt. % in the solution, wherein the nitrate commences separation below the solid-liquid line upon cooling; the curve CE₁ represents the solid-liquid line wherein the initial concentration of nitrate is in a range of 0 to 8 wt. % below which temperature the ice commences to separate on cooling. The temperature-concentration areas surrounded by both the solid-liquid line and the isothermal line A₁E₁C₁ horizontal with the binary eutectic point E₁ (-3.5°C) represent the regions where solid and liquid solution exist, that is, the nitrate crystal + liquid solution, and the ice + liquid solution respectively. On further cooling below the isothermal line A₁E₁C₁, no more liquid solution can exist, but solid mixtures of the nitrates + eutectic, and ice + eutectic respectively.

The vertical line KK'K₁ represents the cooling line of the nitrate with a concentration of [p/(p + q)] along which the nitrate is subjected to follow upon cooling. It is known that a cross point K' of the cooling line KK'K₁ and the isothermal line of the temperature of t' parallel to the line A₁E₁C₁ represents the gravimetric ratio of the nitrate and the liquid solution at the temperature of t', that is, the ratio of distance r between the cross point and the solid-liquid line, and distance s between the cross point K' and the vertical edge. In other words, the solid-liquid line represents a solubility curve of the nitrate at different temperatures.

Similarly to the above, the solid-liquid line CE₁ represents the gravimetric ratio of ice and liquid solution the nitrate concentration of which is more diluted than at the eutectic E₁.

For potassium nitrate-sodium nitrate system, lines AE₂, BE₂ represent the boundary lines where the nitrates and liquid solution exist. For sodium nitrate-water system, lines BE₃, CE₃ are the boundary lines where the nitrate-liquid solution, and ice-liquid solution exist.

Further, a curve E₁E represents the solid-liquid line of separated substance(s)-eutectic E₁-liquid solution of the three-component system, wherein the separated substances are the nitrates when the inorganic solution is richer of salts than at the solid-liquid line E₁E, and the separated substance is ice when the solution is poorer in salts.

Similarly, a curve line E₃E represents the solid-liquid line of separated substance(s)-eutectic E₃-liquid solution which separated substance(s) correspond to the above.

Further, at the temperature below the three-component eutectic point E, the system reveals the solid phase, that is, a mixture of separated substance(s)-ternary eutectic E, which separated substance(s) are either one of or mixture of salt crystals, ice, binary eutectic E₁, and/or E₂.

Strictly speaking, because an aqueous solution of salts can not exist above the boiling point of about 100°C at atmospheric pressure, the solid-liquid lines of the aqueous solution are imaginary and may appear as real lines at an elevated pressure, but are useful for grasping a schematic idea.

Turning back to the ternary eutectic point E, as shown in FIG. 2, the ternary eutectic point E is -22.8°C or approximately -23°C. If the concentration of the three-component system is within a tortuous manifold or plane including the ternary eutectic point E, the binary eutectic point E₁, the ice point C, and the binary eutectic point E₂, the cold heat can be stored until to the ternary eutectic point E of -23°C with a desired IPF as a latent heat of the solids such as ice, the binary eutectics E₁ and E₂ upon cooling.

Upon choosing preferably the inorganic salts and the concentration, the temperature at which a solid firstly commences to separate on cooling -can be set arbitrarily as desired, which temperature is called freezing point hereinafter.

In TABLE 2, characteristics of an example of the latent heat storage solution 15 is shown.

**TABLE 2.**

| EXAMPLE | | | | |
|---|---|---|---|---|
| LATENT HEAT STORAGE SOLUTION: | FREEZING POINT (°C ): | CONCENTRATION OF SALTS ( wt. % ): | | LATENT HEAT: (kcal/g) |
| | | KNO₃ | NaNO₃ | |
| EXAMPLE | -23 | 6 | 37 | 60 |

where water fills the rest part.

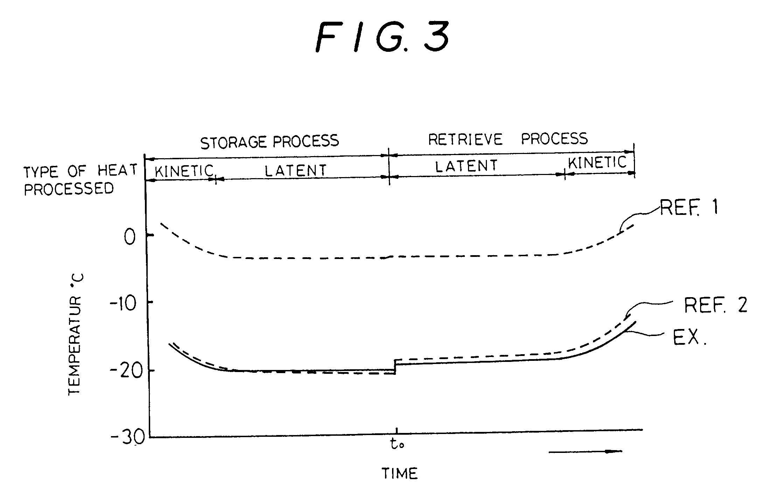

FIG. 3 is a temperature-time diagram illustrating the freezing and fusion curve of the latent heat storage solution described in TABLE 2. The storage/retrieve process in the refrigeration cycle 10 with the Example as the latent heat storage solution 15 will be described as follows.

Firstly, to store the cold heat in the latent heat storage solution 15 contained in the heat storage tank 16, the refrigeration cycle 10 was started to work to compress a primary coolant gas including organic fluorides with the compressor 11. The compressed coolant gas was then led to condenser 12 to be cooled and liquefied. The liquefied coolant was then caused to reduce its pressure with the expansion valve 13 which cold primary coolant was led to the heat exchanger 14.

Secondly, the cold heat of the primary coolant was transferred through the heat exchanger 14 to the latent heat storage solution 15. The exchanged primary coolant was finally returned to the compressor 11 to form a primary cycle.

Lastly, the pump 18 was started to circulate the latent heat storage solution 15 together with the separated solid from the heat storage tank 16 to the heat exchanger 19 through the circulation passage 17 to retrieve the cold heat.

The cold heat was retrieved at the almost constant temperature of -23°C from the latent heat of 60 kcal/g of the latent heat storage solution 15. The tertiary coolant in the heat exchanger 19 could receive the cold heat at the temperature of -23°C.

Because the concentration of the Example corresponded to that of the ternary eutectic point E, the retrievable temperature of cold heat was the only one, that is, the ternary eutectic point E, which allowed IPF to be as large as nearly 100%.

Further in the retrieve process of the Example for the latent heat storage solution 15, the dissolving speed of the ternary eutectic E was fast enough to respond to the fluctuation of load at the heat exchanger 19, because the concentration of potassium nitrate and sodium nitrate was smaller than the saturated concentration.

In FIG. 3, curved lines representing storage/retrieve processes with the refrigeration cycle 10 for References 1 and 2 are shown for a reference purpose in which salt concentrations in the aqueous solution thereof were 8.5 wt. % of KNO₃ corresponding to the binary eutectic E₁, and 39 wt. % of NaNO₃ corresponding to the binary eutectic E₂ respectively.

An aqueous solution of a four-component system may also be used as the latent heat storage solution 15, e.g. a mixture of sodium nitrate, NaNO₃, and ammonium chloride NH₄Cl which have no common anion.

The reason why the system is deemed to be a four-component solution with the two salts is as follows. In the system with salts which possess no common anion, there is a possibility of dissociation/recombination of the salts in the aqueous solution, thus, forming extra salts such as NaCl and NH₄NO₃. Among the four salts, NaCl may be bound as xNaNO₃ + yNH₄Cl - zNH₄NO₃. The system, therefore, has to be specified by four components, e.g., NaNO₃, NH₄Cl, NH₄NO₃ and H₂O.

In the four-component system with a nominal concentration of 30 wt. % of sodium nitrate, and of 7 wt. % of ammonium chloride, a freezing point of -29°C was available, the cold heat of which was transferred to the tertiary coolant in the heat exchanger 19.

The example solutions were at least three-component aqueous solutions including two inorganic salts or more. In the retrieve process of cold heat when the separated solids mainly consisted of ice and frozen binary eutectics dissolved in the liquid solution, therefore, the temperature gradient could be depressed with less change of concentration of inorganic salts in the solution.

The time staying at the fusion temperature, therefore, to retrieve from the latent heat the cold heat with invariable temperature, was made possible to last longer.

Because the total concentration of inorganic salts in the solution was restricted not to exceed that of the system eutectic, the separation of salts or hydrates thereof was prohibited during the storage process of cold heat.

Further because the dissolving speed of ice and eutectics into the cold solution during the retrieve process was faster than that of salts and hydrates thereof, the temperature of the fusing solution could be kept fairly constant.

During the retrieve process, therefore, the cold heat was retrievable stably from the latent heat from the separated substances at the specific temperature for a long time with a good efficiency.

If the concentration of the first inorganic salt which primarily determines the retrieve temperature of cold heat was less than 60 % of that at the binary eutectic, the temperature of the solution varied widely during the retrieve process which failed to retrieve invariably the cold heat at the desired temperature.

If the concentration of the first inorganic salt was more than 98 % of that at the binary eutectic, because the dissolving speed of separated inorganic salt crystals was slow, the crystals remained unsolved in the liquid solution during the retrieve process. Therefore, the time within which the cold heat is retrievable from the latent heat at the desired temperature became shorter.

Therefore, the concentration of the first inorganic salt should be within a range of more than 60% and less than 98%, or more preferably in a range of 70 to 90%, of that at the binary eutectic.

The latent heat storage solution 15 may additionally contain rust inhibitors, fungicides, and so forth, if necessary.

## Claims

1. A latent heat storage solution for storing cold heat as latent heat of the solution in a tank (16), comprising:
an N-component aqueous solution of (N - 1) kinds of inorganic salts with N ≥ 3,
wherein the concentration of any one of the inorganic salts is in a range of 60 to 98 per cent, inclusively, of that at the binary eutectic thereof with water, and the overall content of the inorganic salts in the aqueous solution is less than at the N-component eutectic of the latent heat storage solution.

2. A solution according to claim 1, wherein the cold heat is storable into or retrievable from the latent heat storage solution by use of the latent heat of the binary eutectics.

3. Use of a latent heat storage solution according to any of claims 1 or 2 in a latent heat storage apparatus.

4. Use according to claim 3, wherein a heat storage tank (16) is connected with a load through a circulating passage, which is formed so that the cold heat is directly retrievable from the latent heat of the separated substances.

5. Use according to claim 3 or 4, wherein the heat storage tank includes a heat exchanger (14) for circulation of a coolant, the heat exchanger acting as an evaporator in a refrigeration cycle.

## Patentansprüche

1. Speicherlösung für latente Wärme, zur Speicherung von Kälte als latenter Wärme der Lösung in einem Tank (16), umfassend:
eine N-komponentige wäßrige Lösung von (N - 1) Arten anorganischer Salze mit N ≥ 3,
wobei die Konzentration eines jeden beliebigen der anorganischen Salze im Bereich von einschließlich 60 bis einschließlich 98% der Konzentration an seinem binären Eutektikum mit Wasser liegt und die Gesamtkonzentration der anorganischen Salze in der wäßrigen Lösung geringer als am N-Komponenten-Eutektikum der Speicherlösung für latente Wärme ist.

2. Lösung nach Anspruch 1, wobei die Kälte in die Speicherlösung für latente Wärme einspeicherbar oder aus ihr rückgewinnbar ist, indem die latente Wärme der binären Eutektika verwendet wird.

3. Verwendung einer Speicherlösung für latente Wärme nach einem der Ansprüche 1 oder 2 in einer Speichervorrichtung für latente Wärme.

4. Verwendung nach Anspruch 3, wobei ein Wärmespeichertank (16) mit einer Last über einen Umlaufweg verbunden ist, der so ausgebildet ist, daß die Kälte direkt aus der latenten Wärme der getrennten Substanzen gewinnbar ist.

5. Verwenden nach Anspruch 3 oder 4, wobei der Wärmespeichertank einen Wärmeaustauscher (14) für den Umlauf eines Kühlmittels aufweist, der als Verdampfer in einem Kühlzyklus dient.

## Revendications

1. Solution de stockage de chaleur latente pour stocker de la chaleur froide sous forme de chaleur latente de la solution dans un réservoir (16), comprenant :
une solution aqueuse à N composants de (N - 1) types de sels minéraux, avec N ≥ 3,
dans laquelle la concentration de l'un quelconque des sels minéraux est comprise entre 60 et 98 %, bornes comprises, de celle dans le système eutectique binaire de celle-ci avec l'eau, et la teneur globale en sels minéraux dans la solution aqueuse est inférieure à celle dans le système eutectique à N composants de la solution de stockage de chaleur latente.

2. Solution selon la revendication 1, dans laquelle la chaleur froide peut être stockée dans la solution de stockage de chaleur latente, ou récupérée de celle-ci, par utilisation de la chaleur latente des systèmes eutectiques binaires.

3. Utilisation d'une solution de stockage de chaleur latente selon l'une quelconque des revendications 1 et 2, dans un appareil de stockage de chaleur latente.

4. Utilisation selon la revendication 3, dans laquelle le réservoir de stockage (16) est connecté à une charge par l'intermédiaire d'un passage de circulation, qui est formé de telle sorte que la chaleur froide soit directement récupérable à partir de la chaleur latente des substances séparées.

5. Utilisation selon la revendication 3 ou 4, dans laquelle le réservoir de stockage de chaleur comprend un échangeur de chaleur (14) pour la circulation d'un réfrigérant, l'échangeur de chaleur agissant comme un évaporateur dans un cycle de réfrigération.
